# FASCICULE DE BREVET EUROPEEN

(11) **EP 1 116 627 B1**
(45) Date de publication et mention de la délivrance du brevet: **01.09.2004**
(21) Numéro de dépôt: 01400064.0
(22) Date de dépôt: 11.01.2001
(51) Int. Cl.: B60N 2/36, B60N 2/10, B60N 2/20

(54) **Siège pliant à déverrouillage automatique pour véhicule automobile**
Klappsitz mit automatischer Entriegelung für Kraftfahrzeug
Foldable seat with automatic unlocking for an motor vehicle

(30) Priorité: 14.01.2000 FR 0000437
(43) Date de publication de la demande: 18.07.2001
(73) Titulaire: Peugeot Citroen Automobiles SA, 92200 Neuilly sur Seine (FR)
(72) Inventeur: Dauphiné, Jacques, 25400 Arbouans (FR)
(74) Mandataire: Robert, Jean-François

(56) Documents cités:
- FR-A- 2 625 955
- FR-A- 2 779 688
- FR-A- 2 781 435

## Description

La présente invention se rapporte à un siège pliant pour véhicule automobile.

Elle se rapporte plus particulièrement à un siège pourvu d'un dossier rabattable sur une assise, cette dernière étant articulée en partie avant, de façon à permettre le basculement du siège vers l'avant. Cette configuration permet en particulier de faciliter l'accès d'un passager derrière le siège et/ou de ménager une surface de chargement à la place du siège.

De façon générale, on connaît des assises comportant des moyens d'ancrage arrière avec le plancher nécessitant une intervention manuelle spécifique pour les déverrouiller, afin de pouvoir basculer le siège vers l'avant. C'est-à-dire que les moyens d'ancrage sont généralement reliés à des moyens de commande, tels qu'une manette, sur lesquels l'utilisateur doit agir, uniquement dans le but de libérer l'assise.

Cette intervention s'inscrit généralement dans une série d'actions déjà contraignantes pour un utilisateur, consistant par exemple à déverrouiller le dossier, à le rabattre sur l'assise et à basculer l'ensemble du siège vers l'avant.

On connaît également, comme décrit dans le document FR 2 625 955 des assises dont les moyens d'ancrage arrière sont couplés avec le dossier de manière à être déverrouillés automatiquement lors du rabattement du dossier sur l'assise. Dans de tels sièges, les moyens d'ancrage arrière demeurent déverrouillés, y compris lorsque l'assise a été redisposée dans sa position classique d'utilisation, aussi longtemps que le dossier n'a pas également été redéployé dans sa position classique d'utilisation. Le retour du dossier dans cette dernière position est donc nécessaire à l'ancrage au plancher de la partie arrière de l'assise.

Le but de la présente invention est de faciliter l'intervention de l'utilisateur, en simplifiant les opérations liées au rabattement du dossier et au basculement du siège vers l'avant. A cet effet, la présente invention concerne un siège pliant pour véhicule automobile comprenant un dossier (1) articulé à sa base sur une assise et pouvant pivoter entre une première position d'utilisation et une seconde position rabattue, tandis que l'assise est articulée dans sa partie avant sur un plancher et comporte dans sa partie arrière des moyens d'ancrage avec le plancher pouvant se présenter dans une position passive, permettant de libérer l'assise pour la basculer vers l'avant autour de son articulation, ou dans une position active, permettant de fixer l'assise dans sa partie arrière, des moyens de liaison coopérant avec le dossier et les moyens d'ancrage pour disposer ces derniers automatiquement en position passive lorsque le dossier est incliné vers l'avant au-delà d'une troisième position de déverrouillage, comprise entre la première position d'utilisation et la seconde position rabattue.

Le siège pliant suivant l'invention peut également comporter une ou plusieurs des caractéristiques suivantes :
- les moyens de liaison sont conformés de façon à redisposer les moyens d'ancrage en position active lorsque le dossier est incliné vers l'avant au-delà d'une quatrième position de verrouillage située entre la position de déverrouillage et la position rabattue,
- les moyens de liaison comprennent au moins un levier principal articulé sur l'assise selon un axe transversal au véhicule, le levier principal étant pourvu d'une première extrémité reliée au dossier via des premiers moyens d'entraînement, et d'une seconde extrémité reliée aux moyens d'ancrage via des seconds moyens d'entraînement,
- le levier principal et les seconds moyens d'entraînement sont conformés de façon à pouvoir disposer les moyens d'ancrage en position active ou passive lorsque le levier principal pivote autour de son articulation respectivement dans le sens horaire ou anti-horaire,
- les premiers moyens d'entraînement comprennent au moins un coulisseau monté mobile sur un guide solidaire de l'armature de l'assise, le coulisseau étant relié d'une part, à la première extrémité du levier principal par des moyens d'accrochage, et d'autre part, au dossier par des premiers moyens de traction, de façon que le rabattement du dossier sur l'assise depuis la position d'utilisation jusqu'à la position rabattue provoque le déplacement du coulisseau respectivement depuis une première position avant jusqu'à une seconde position arrière,
- le coulisseau coopère avec le levier principal de façon à, d'une part, disposer les moyens d'ancrage en position passive lorsque le coulisseau se déplace vers l'arrière et franchit une troisième position intermédiaire entre la position avant et la position arrière, et d'autre part, à redisposer les moyens d'ancrage en position active lorsque le coulisseau se déplace vers l'arrière et franchit une quatrième position de débrayage située entre la position intermédiaire et la position arrière, lesdites positions intermédiaire et de débrayage correspondant respectivement aux positions de déverrouillage et de verrouillage du dossier,
- les moyens d'accrochage entre le coulisseau et le levier principal sont débrayables, de sorte que lorsque le coulisseau se déplace vers l'arrière jusqu'à la position de débrayage, le coulisseau entraîne le levier principal en rotation dans le sens anti-horaire et lorsque le coulisseau poursuit son déplacement vers l'arrière au-delà de la position de débrayage, le coulisseau libère le levier principal, permettant la rotation de ce dernier dans le sens horaire,
- les seconds moyens d'entraînement comprennent au moins un levier de commande des moyens d'ancrage articulé sur l'assise ou sur un élément adjacent, le levier de commande comportant une extrémité reliée à la seconde extrémité du levier principal par des seconds moyens de traction,
- les moyens d'accrochage sont constitués d'un système butée-doigt, la butée et le doigt étant formés respectivement sur un flan du coulisseau et sur la première extrémité du levier principal,
- le coulisseau comporte un flan coopérant en contact avec une butée de guidage montée sur l'armature de l'assise lorsque le coulisseau se déplace vers l'arrière jusqu'à la position de débrayage, de façon à provoquer un faible déplacement de ce dernier dans une direction non colinéaire à son axe de coulissement, ledit déplacement étant destiné à libérer le levier principal du coulisseau,
- des moyens de rappel sont disposés entre le coulisseau et l'armature de l'assise, les moyens de rappel étant agencés de façon à s'opposer au déplacement du coulisseau vers l'arrière,
- les seconds moyens de traction reliant le levier de commande au levier principal comportent au moins une biellette articulée à ses extrémités au moyen de liaisons pivot et/ou glissière,
- les premiers moyens de traction reliant le coulisseau au dossier comportent au moins un moyen souple tel qu'un câble,
- le guide est constitué d'un doigt apte à coulisser dans un logement oblong formé dans le corps du coulisseau.

Les caractéristiques de l'invention mentionnées ci-dessus, ainsi que d'autres, apparaîtront plus clairement à la lecture de la description suivante d'un exemple non limitatif de réalisation, en se référant aux dessins annexés sur lesquels :

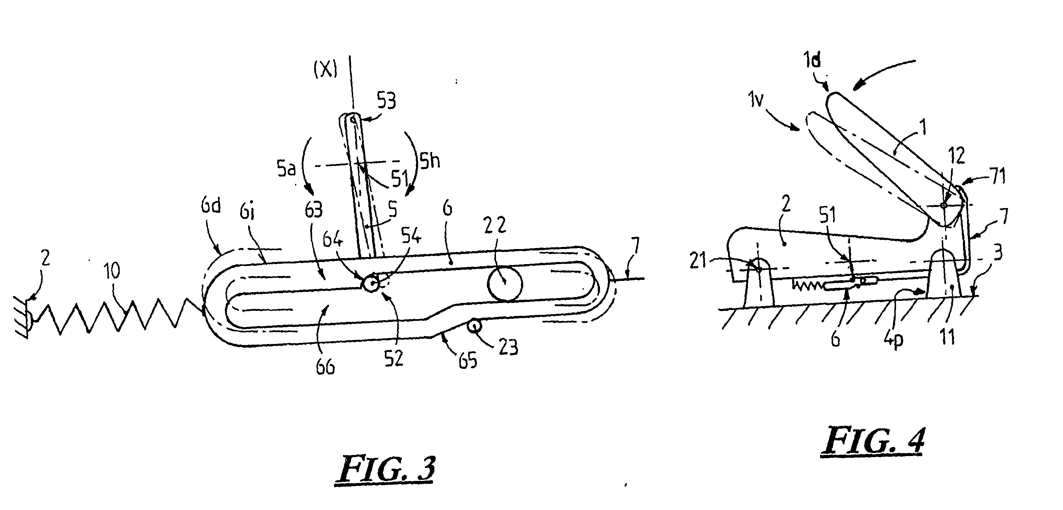

- les figures 2, 4 et 6 sont des vues de côté d'un siège pliant selon l'invention, représenté respectivement :
   - en position d'utilisation,
   - en situation de rabattement du dossier à une position de débrayage (trait fort) et à une position de verrouillage (trait mixte),
   - en position de rabattement complet du dossier et de basculement du siège vers l'avant,
- les figures 1, 3, 5 sont des vues d'un détail du siège pliant selon l'invention, illustrant le coulisseau et correspondant respectivement aux positions du siège pliant représenté aux figures 2, 4 (trait fort) et 6,

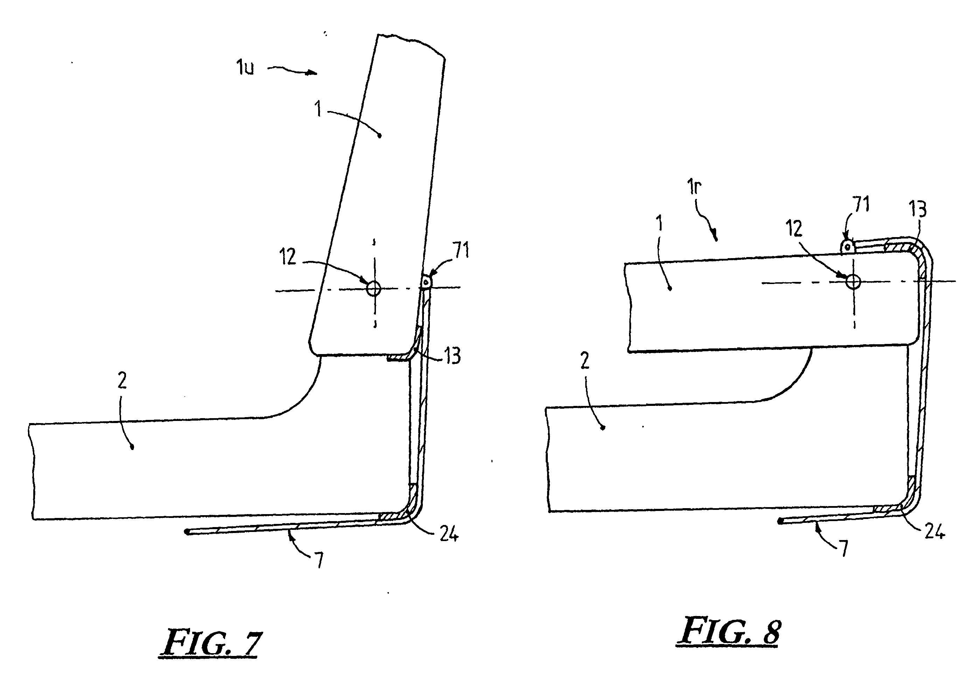

- les figures 7 et 8 sont des vues d'un détail du siège selon l'invention, au niveau de l'articulation du dossier avec l'assise, correspondant respectivement à la position d'utilisation et à la position rabattue du dossier,

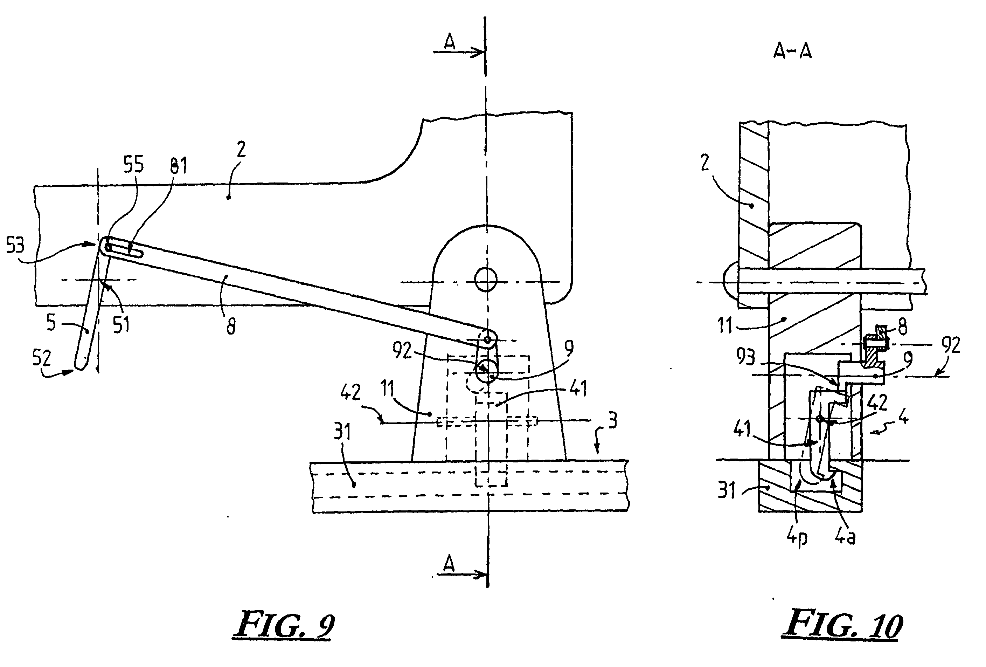

- la figure 9 est une vue d'un détail du siège pliant selon l'invention, illustrant la zone de fixation arrière de l'assise sur le plancher,
- la figure 10 est une vue en coupe suivant la ligne A-A du détail de la figure 9, illustrant notamment les moyens d'ancrage en positions active (trait fort) et inactive (trait mixte).

On a représenté aux figures 2, 4 et 6 un siège pliant pour véhicule automobile, pouvant être escamoté en « portefeuille ». C'est à dire que le siège est pourvu d'un dossier 1 articulé à sa base sur une assise 2 au moyen d'une liaison pivot 12. Le dossier 1 peut ainsi pivoter entre une première position d'utilisation 1u et une seconde position rabattue 1r sur l'assise. L'assise 2 étant également articulée dans sa partie avant sur un plancher 3 au moyen d'une liaison pivot 21, elle peut être basculée vers l'avant, entraînant avec elle le dossier 1.

Un tel siège pliant peut avantageusement être monté sur un véhicule de type « monospace » pourvu d'une deuxième et d'une troisième rangée d'assises, ne disposant pas d'ouverture latérale en face de la troisième rangée d'assises. En effet, l'implantation d'un tel siège pliant sur un côté de la deuxième rangée d'assises doit permettre de faciliter l'accès d'un passager à la troisième rangée d'assise, sans restreindre le nombre d'assises de la seconde rangée.

On comprendra bien évidemment que ce type de siège peut être implanté sur d'autres types de véhicule ou qu'il peut s'avérer intéressant uniquement dans le but de ménager un espace de chargement à l'endroit du siège pliant.

Dans la suite de l'exposé, on évoquera la « direction longitudinale » du siège. Cette direction est sensiblement horizontale et perpendiculaire à l'axe de la liaison pivot 12. Dans le cas d'un agencement classique du siège dans le véhicule, cette direction longitudinale sera généralement confondue avec la direction longitudinale du véhicule.

Pour assurer sa fixation avec le plancher 3, l'assise 2 comprend en partie arrière des moyens d'ancrage 4. Ces derniers peuvent être disposés sur l'armature même de l'assise 2 ou sur des éléments adjacents, par exemple sur un pied arrière monté fixe ou pivotant par rapport à l'assise 2.

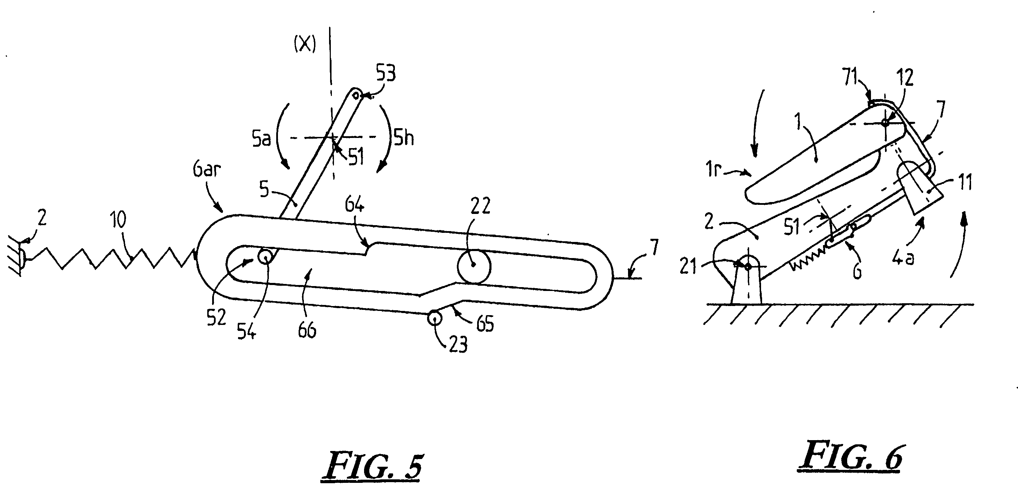

Les moyens d'ancrage 4 de ce type de siège peuvent traditionnellement se présenter dans deux positions. Une première position active 4a des moyens d'ancrage 4 permet, soit de maintenir l'assise 2 verrouillée sur le plancher 3 (figures 2, 9 et 10 : trait fort), soit lorsque cette assise 2 est basculée vers l'avant (figure 6), d'être en mesure de la verrouiller sur le plancher 3 lors d'un redéploiement du siège vers la position classique d'utilisation par un passager. Une seconde position passive 4p correspond quant à elle à une position déverrouillée de l'assise 2 (figures 4 : trait fort et 10 : trait mixte), permettant le basculement du siège vers l'avant.

Pour une bonne compréhension du mécanisme d'ancrage, des moyens d'ancrage 4 connus seront décrits ultérieurement.

Selon l'invention, des moyens de liaison 5, 6, 7, 8, 9 sont disposés entre le dossier 1 et les moyens d'ancrage 4, de façon à commander automatiquement ces derniers 4 lors du rabattement du dossier 1.

Pour être plus précis, lorsque le dossier 1 est incliné vers l'avant au-delà d'une troisième position de déverrouillage 1d, comprise entre la position d'utilisation 1u et la position rabattue 1r, les moyens d'ancrage 4 se disposent en position passive 4p. De plus, lorsque le dossier 1 est incliné vers l'avant au-delà d'une quatrième position de verrouillage 1v, les moyens d'ancrage 4 se redisposent en position active 4a.

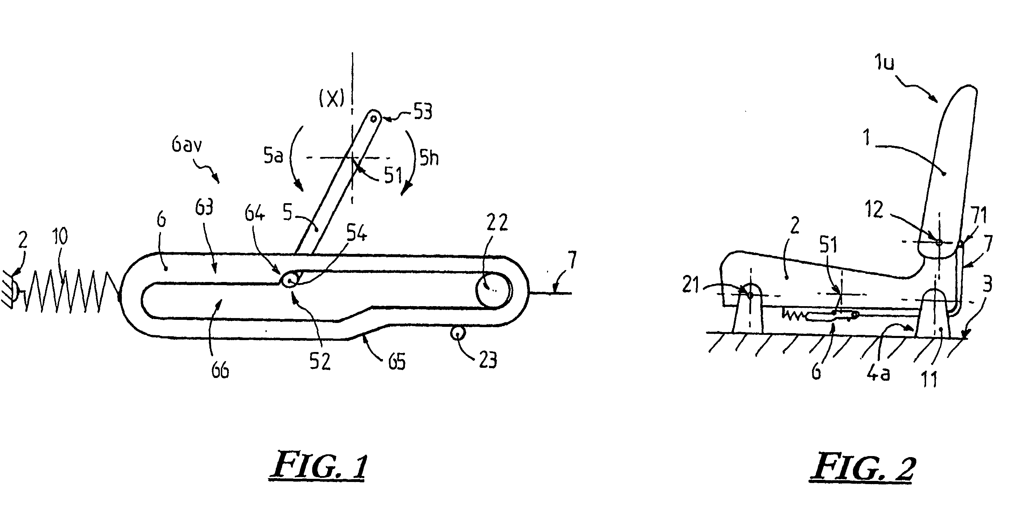

Comme le montrent les figures 1, 3 et 5, les moyens de liaison comprennent un levier principal 5 solidaire de l'un des côtés de l'assise 2. Le levier principal 5 est monté mobile en rotation sur l'armature de l'assise 2 au moyen d'une articulation 51 ayant son axe sensiblement parallèle à celui de l'articulation 12 entre le dossier 1 et l'assise 2. En pivotant autour de son articulation 51 peut se débattre de part et d'autre d'une direction verticale X sensiblement perpendiculaire au plan de l'assise 2. Le levier principal 5 peut pivoter dans le sens anti-horaire 5a ou dans le sens horaire 5h.

Précisons que les moyens de liaison sont conformés de façon à pouvoir disposer les moyens d'ancrage 4 en positions passive 4p ou active 4a lorsque le levier principal pivote respectivement dans le sens anti-horaire 5a ou horaire 5h.

Des moyens de rappel (non représentés) sont disposés entre le levier principal 5 et l'armature de l'assise 2, de façon à imposer un pivotement du levier 5 dans le sens horaire 5h, en l'absence d'effort opposé d'intensité supérieure. Ces moyens de rappel peuvent être constitués, par exemple, d'un ressort hélicoïdal de traction ou de flexion.

Comme représenté aux figures 1, 3 et 5, le levier principal 5 comporte une première extrémité 52 reliée au dossier 1 via des premiers moyens d'entraînement 6, 7. Il comporte également une seconde extrémité 53 reliée aux moyens d'ancrage 4 par des seconds moyens d'entraînement 8, 9. Ces premiers 6, 7 et seconds 8, 9 moyens d'entraînement seront décrits plus bas.

Notons que l'articulation 51 du levier principal 5 est située entre les première 52 et seconde 53 extrémités du levier principal 5.

Dans l'exemple de réalisation décrit, la première extrémité 52 et la seconde extrémité 53 du levier principal 5 sont situées respectivement en parties inférieure et supérieure de ce dernier. Dans ce cas, le sens de pivotement horaire 5h ou anti-horaire 5a du levier principal 5 correspond à un déplacement respectivement vers l'arrière ou vers l'avant de la première extrémité 52, par rapport à la direction longitudinale au siège.

Intéressons-nous dans un premier temps à la description des premiers moyens d'entraînement 6, 7 reliant la première extrémité 52 du levier principal 5 au dossier 1.

Les premiers moyens d'entraînement 6, 7 comprennent un coulisseau 6 monté mobile sur un guide 22 fixé à l'armature de l'assise 2.

Le coulisseau 6 a une forme générale oblongue. Il est orienté de façon sensiblement parallèle à la direction longitudinale du siège ou au plan de l'assise 2. Le coulisseau 6 peut être relativement plat, en regard de sa longueur et de sa hauteur.

Comme représenté aux figures 1, 3 et 5, le coulisseau 6 peut se déplacer entre une première position avant 6av et une seconde position arrière 6ar.

Le coulisseau 6 est relié dans sa partie arrière, à la base du dossier 1 par des premiers moyens de traction 7. Comme représenté aux figures 7 et 8, ces premiers moyens de traction 7 sont constitués de moyens souples tels qu'un câble, reliés à la face arrière du dossier 1. La liaison entre le câble et le dossier 1 est disposée de sorte que le câble contourne au moins en partie l'extrémité arrière de l'assise 2, ainsi que la base du dossier 1. Le point d'attache 71 du câble 7 sur le dossier 1 peut être situé sensiblement à la hauteur de l'articulation 12 entre le dossier 1 et l'assise 2. Ainsi, lorsque le dossier 1 est disposé dans la position rabattue 1r, ce point d'attache 71 vient se situer sensiblement au dessus de l'articulation 12, ce qui entraîne le déplacement du câble 7.

Des moyens de glissement 13, 24 (figures 7 et 8), tels que des supports ou des goulottes peuvent être disposés entre le câble 7 et l'assise 2 ou le dossier 1. Le glissement de ce câble est ainsi facilité. De plus, ces moyens de glissement empêchent la pénétration du câble 7 dans la matelassure du siège.
Le coulisseau 6 est également relié dans sa partie avant, à un élément d'armature de l'assise 2 par des moyens de rappel 10, tel qu'un ressort de traction.

Par ailleurs, comme le montrent les figures 1, 3 et 5, le coulisseau 6 comporte un évidement 66 ayant une forme générale oblongue. L'évidement 66 est conformé dans sa partie arrière de façon à coopérer en coulissement avec le guide 22 monté sur l'armature de l'assise 2.

Le guide 22 a la forme générale d'un doigt sensiblement parallèle à l'axe de l'articulation 51 du levier principal 5. Le coulisseau 6 est enfilé transversalement sur le guide 22, de façon à pouvoir coulisser sur ce dernier 22.

Notons que lorsque le coulisseau 6 est en position avant 6av, le guide 22 peut se situer sensiblement à proximité de l'extrémité arrière du coulisseau 6.

Avantageusement, le coulisseau 6 et le guide 22 sont conformés pour permettre au coulisseau 6 de se déplacer selon deux mouvements simultanés. Un premier mouvement correspond à l'axe de coulissement du coulisseau 6, tandis qu'un second mouvement est non colinéaire au premier. Par exemple, le second mouvement du coulisseau 6 peut correspondre à un léger pivotement autour de l'axe du guide 22. C'est-à-dire que la partie avant du coulisseau 6 peut se surélever légèrement par rapport à sa partie arrière. Avantageusement, le second mouvement peut être simultané au premier sur une partie seulement de la course du coulissement.

Pour ce faire, le coulisseau 6 comporte dans sa partie inférieure un flanc65 incliné apte à coopérer en contact avec une butée de guidage 23 montée sur l'armature de l'assise 2. Le flanc65 et la butée de guidage 23 sont conformés de façon que la partie avant du coulisseau 6 se surélève légèrement par rapport à sa partie arrière, lorsque le coulisseau 6 se déplace vers l'arrière jusqu'à la position de débrayage 6d. Préférentiellement, le flan 65 incliné est situé en partie inférieure du coulisseau 6.

Avantageusement, la butée de guidage 23 est un doigt sensiblement parallèle à l'axe du guide 22. Ce doigt peut être fixé à l'armature de l'assise 2, au-dessous du coulisseau 6. Dans l'exemple décrit, il est situé à proximité du guide 22, sensiblement à l'avant de celui-ci, par rapport à la direction longitudinale du siège.

Par ailleurs, le coulisseau 6 est relié à la première extrémité du levier principal 5 par des moyens d'accrochage 54, 64. C'est à dire que le coulisseau 6 comporte un flancformant une butée 64 apte à coopérer avec un doigt 54 monté sur la première extrémité 52 du levier principal 5. Plus précisément, la butée 64 est formée par une différence d'épaisseur dans une paroi supérieure 63 délimitant l'évidement 66 du coulisseau 6. Le doigt 54 est de préférence sensiblement parallèle à l'axe de l'articulation 51 du levier principal 5. Dans l'exemple de réalisation décrit, les moyens d'accrochage 54, 64 sont disposés sensiblement au milieu du coulisseau 6.

Le flanc 64 et le doigt 54 sont conformés de sorte que le déplacement du coulisseau 6 vers l'arrière permette d'entraîner le levier principal 5 en rotation autour de son articulation 51. Plus précisément, le levier principal 5 est entraîné en rotation dans le sens anti-horaire 5a, lorsque le coulisseau 6 se déplace vers l'arrière depuis sa position avant 6av jusqu'à une position de débrayage 6d, située entre la position avant 6av et la position arrière 6ar. Rappelons que la rotation du levier principal 5 dans le sens anti-horaire Sa permet de disposer les moyens d'ancrage 4 en position passive 4p.

La position de débrayage 6d correspond sensiblement au pivotement maximal du coulisseau 6 autour de l'axe du guide 22, c'est à dire au déplacement maximal de la partie avant du coulisseau vers le haut.

Avantageusement, les moyens d'accrochage 54, 64 sont débrayables. C'est à dire que le flanc 64 et le doigt 54 sont conformés pour permettre de libérer le levier principal 5 lorsque le coulisseau 6 se déplace vers l'arrière au-delà de la position de débrayage 6d. En effet lorsque le coulisseau 6 franchit la position de débrayage 6d, le pivotement du coulisseau 6 est tel que la butée 64 ne forme plus obstacle vis à vis du doigt 54 et n'entraîne donc plus ce dernier 54 dans son déplacement vers l'arrière.

Sous l'action des moyens de rappel (non représentés) disposés entre le levier principal 5 et l'armature de l'assise 2, le levier principal 5 peut donc pivoter dans le sens opposé, c'est à dire dans le sens horaire 5h, propre à redisposer les moyens d'ancrage 4 en position active 4a.

On comprendra que les moyens d'ancrage 4 peuvent se disposer en position passive 4p lorsque le levier principal 5 a pivoté autour de son articulation 51 dans le sens anti-horaire d'un angle minimal. Cet angle minimal ne correspond pas nécessairement à la position limite du levier principal 5 lorsqu'il pivote dans le sens anti-horaire Sa, c'est à dire lorsque le coulisseau 6 a atteint sa position de débrayage 6d. Cet angle minimal de rotation du levier principal 5 peut correspondre une position intermédiaire du levier principal 5 entre ses deux positions limites. C'est à dire que l'angle minimal de rotation du levier principal 5 peut être atteint lorsque le coulisseau 6 a atteint une quatrième position intermédiaire 6i, située entre la première position avant 6av et la troisième position de débrayage 6d.

On comprendra que la position intermédiaire 6i et la position de débrayage 6d du coulisseau 6 correspondent respectivement à la position de déverrouillage 1d et à la position de verrouillage 1v du dossier 1.

Intéressons-nous maintenant à la description des seconds moyens d'entraînement 8, 9 reliant la seconde extrémité 53 du levier principal 5 aux moyens d'ancrage 4.

Comme représenté aux figures 9 et 10, les seconds moyens d'entraînement 8, 9 comprennent au moins un levier de commande 9 des moyens d'ancrage 4.

Le levier de commande 9 peut être articulé 92 sur un pied arrière 11 monté fixe ou pivotant par rapport à l'assise 2. L'axe de l'articulation 92 est sensiblement parallèle à l'axe de l'articulation 51 du levier principal 5.

Le levier de commande 9 comporte une extrémité 91 reliée à la seconde extrémité 53 du levier principal 5 par des seconds moyens de traction 8. De préférence, les seconds moyens de traction 8 sont constitués d'une biellette 8 articulée à ses extrémités par des liaisons pivot et/ou glissière.

Dans l'exemple décrit, la biellette 8 est articulée avec le levier de commande 9 par une liaison pivot 91 d'axe sensiblement parallèle à celui de l'articulation 92.

A son autre extrémité, la biellette 8 est reliée avec la seconde extrémité 53 du levier principal 5 par une double liaison ; une liaison pivot 54 d'axe sensiblement parallèle à celui de l'articulation 51, ainsi qu'une liaison glissière d'axe sensiblement parallèle à celui de la biellette 8. L'extrémité correspondante de la biellette 8 comporte un trou oblong 81 sensiblement parallèle à la biellette 8, ce trou 81 étant traversé par un pion 55 monté sur la seconde extrémité du levier principal 5.

Comme représenté aux figures 9 et 10, les moyens d'ancrage 4 arrière d'un siège pliant comportent classiquement un pêne de verrouillage 41 articulé sur l'armature de l'assise 2 ou sur un élément adjacent au moyen d'une liaison pivot 42. L'élément adjacent peut être un pied arrière 11 de l'assise 2. Le pêne 41 peut avoir la forme générale d'un L dont la branche longue est orientée sensiblement verticalement, la branche courte étant située en partie supérieure. La liaison pivot 42 est située sur la branche longue du L, sensiblement à distance de l'extrémité libre de la branche courte du L.

L'axe 92 du levier de commande 9 supporte un élément tel qu'un doigt 93 ou une came apte à coopérer en contact avec l'extrémité libre de la branche courte du L, selon la position angulaire du levier de commande 9. Le doigt 93 est conformé de façon qu'une légère rotation du levier de commande 9 autour de son axe 92 provoque un léger déplacement vers le bas de l'extrémité libre de la branche courte du L. Par un effet de levier, ce déplacement entraîne le pivotement du pêne autour de son articulation 42.

L'extrémité opposée du L, c'est à dire l'extrémité inférieure de la branche longue est conformée de manière à pouvoir coopérer en contact avec une gâche 31 solidaire du plancher 3.

Plus précisément, lorsque les moyens d'ancrage 4 sont en position active 4a (figure 10 : trait fort), un crochet formé sur l'extrémité inférieure du pêne 41 vient s'ancrer sur un rebord de la gâche 31, de sorte que l'assise 2 ne peut être soulevée dans cette configuration. A l'inverse, lorsque les moyens d'ancrage 4 sont en position passive 4p (figure 10 : trait mixte), le pêne 41 subit un léger pivotement autour de son articulation 42, permettant de libérer le crochet du rebord formé sur la gâche 31, de sorte que l'assise 2 peut être soulevée et rabattue vers l'avant.

Décrivons brièvement le fonctionnement du siège pliant selon l'invention.

Partons de la configuration dans laquelle le siège est en position d'utilisation classique. L'assise 2 est pieds au plancher 3, les moyens d'ancrage 4 étant en position active 4a, tandis que le dossier 1 est en position d'utilisation 1u. Le coulisseau 6 est alors dans sa position avant 6av. Le levier principal 5 disposé de sorte que sa première extrémité 52 coopère en contact avec la butée 64 du coulisseau 6.

Lorsqu'on incline le dossier 1 vers l'avant, les premiers moyens de traction 7 entraînent le déplacement du coulisseau 6 vers l'arrière.

Lorsque le dossier 1 atteint sa position de déverrouillage 1d, le coulisseau 6 se trouve dans la position intermédiaire 6i. Dans son déplacement, le coulisseau 6 a entraîné la rotation du levier principal 5 dans le sens anti-horaire Sa. La seconde extrémité 53 du levier principal 5 provoque la mise en position inactive 4i des moyens d'ancrage 4, via les seconds moyens d'entraînement 8, 9. Le pêne 41 des moyens d'ancrage 4 a pivoté d'un angle minimal mais suffisant pour ne plus être prisonnier de la gâche 31.

Dès ce stade, l'assise 2 peut être soulevée dans sa partie arrière, de façon à désolidariser le pêne 41 de la gâche 31.

Lorsque le dossier 1 a atteint sa position de verrouillage 1v, le coulisseau 6 se trouve dans la position de débrayage 6d. Dans son déplacement, le coulisseau 6 a encore entraîné le levier principal 5 en rotation dans le sens anti-horaire 5a. La seconde extrémité 53 du levier principal 5 permet de maintenir les moyens d'ancrage 4 en position inactive 4i, via les seconds moyens d'entraînement 8, 9. Le pêne 41 des moyens d'ancrage 4 a pivoté d'un angle plus important que précédemment, qui lui permet toujours de ne pas être prisonnier de la gâche 31.

Jusqu'à ce stade, l'assise 2 peut encore être soulevée dans sa partie arrière.

Lorsque le dossier 1 est incliné au-delà de sa position de verrouillage 1v, les moyens d'accrochage 54, 64 se débrayent. Le levier principal 5 s'est donc libéré du coulisseau 6, et est entraîné en rotation vers sa position d'origine, dans le sens horaire 5h. La seconde extrémité 53 du levier principal 5 permet ainsi de redisposer les moyens d'ancrage 4 en position active 4a, via les seconds moyens d'entraînement 8, 9.

Le siège peut ainsi être plié. C'est à dire que le dossier 1 peut être disposé en position rabattue 1r, tandis que l'assise 2 peut être basculée vers l'avant.

Lors d'un redéploiement du siège en position d'utilisation, l'assise pourra alors se verrouiller sur le plancher 3 du fait que les moyens d'ancrage sont en position active 4a.

Par exemple, le dispositif peut s'appliquer indifféremment à l'un ou l'autre des côtés du siège. Il peut également s'appliquer aux deux côtés.

On comprendra que le siège pliant selon l'invention peut également s'adapter à d'autres mécanismes d'ancrage montés sur l'assise.

## Revendications

1. Siège pliant pour véhicule automobile comprenant un dossier (1) articulé (12) à sa base sur une assise (2) et pouvant pivoter entre une première position d'utilisation (1u) et une seconde position rabattue (1r), tandis que l'assise est articulée (21) dans sa partie avant sur un plancher (3) et comporte dans sa partie arrière des moyens d'ancrage (4) avec le plancher (3) pouvant se présenter dans une position passive (4p), permettant de libérer l'assise (2) pour la basculer vers l'avant autour de son articulation (21), ou dans une position active (4a), permettant de fixer l'assise (2) dans sa partie arrière, les moyens de liaison (5, 6, 7, 8, 9) coopérant avec le dossier (1) et les moyens d'ancrage (4) pour disposer ces derniers (4) automatiquement en position passive (4p) lorsque le dossier (1) est incliné vers l'avant au-delà d'une troisième position de déverrouillage (1d), comprise entre la première position d'utilisation (1u) et la seconde position rabattue (1r), **caractérisé en ce que** les moyens de liaison (5, 6, 7, 8, 9) sont conformés de façon à redisposer les moyens d'ancrage (4) en position active (4a) lorsque le dossier (1) est incliné vers l'avant au-delà d'une quatrième position de verrouillage (1v) située entre la position de déverrouillage (1d) et la position rabattue (1r).

2. Siège pliant selon la revendication 1, **caractérisé en ce que** les moyens de liaison (5, 6, 7, 8, 9) comprennent au moins un levier principal (5) articulé sur l'assise (2) selon un axe (51) transversal au véhicule, le levier principal (5) étant pourvu d'une première extrémité (52) reliée au dossier (1) via des premiers moyens d'entraînement (6, 7), et d'une seconde extrémité (53) reliée aux moyens d'ancrage (4) via des seconds moyens d'entraînement (8, 9).

3. Siège pliant selon la revendication 2, **caractérisé en ce que** le levier principal (5) et les seconds moyens d'entraînement (8, 9) sont conformés de façon à pouvoir disposer les moyens d'ancrage (4) en position active (4a) ou passive (4p) lorsque le levier principal (5) pivote autour de son articulation (51) respectivement dans le sens horaire (5h) ou anti-horaire (5a).

4. Siège pliant selon la revendication 3, **caractérisé en ce que** les premiers moyens d'entraînement (6, 7) comprennent au moins un coulisseau (6) monté mobile sur un guide (22) solidaire de l'armature de l'assise (2), le coulisseau (6) étant relié d'une part, à la première extrémité (52) du levier principal (5) par des moyens d'accrochage (54, 64), et d'autre part, au dossier (1) par des premiers moyens de traction (7), de façon que le rabattement du dossier (1) sur l'assise (2) depuis la position d'utilisation (1u) jusqu'à la position rabattue (1r) provoque le déplacement du coulisseau (6) respectivement depuis une première position avant (6av) jusqu'à une seconde position arrière (6ar).

5. Siège pliant selon la revendication 4, **caractérisé en ce que** le coulisseau (6) coopère avec le levier principal (5) de façon à, d'une part, disposer les moyens d'ancrage (4) en position passive (4p) lorsque le coulisseau (6) se déplace vers l'arrière et franchit une troisième position intermédiaire (6i) entre la position avant (6av) et la position arrière (6ar), et d'autre part, à redisposer les moyens d'ancrage (4) en position active (4a) lorsque le coulisseau (6) se déplace vers l'arrière et franchit une quatrième position de débrayage (6d) située entre la position intermédiaire (6i) et la position arrière (6ar), lesdites positions intermédiaire (6i) et de débrayage (6d) correspondant respectivement aux positions de déverrouillage (1d) et de verrouillage (1v) du dossier (1).

6. Siège pliant selon la revendication 5, **caractérisé en ce que** les moyens d'accrochage (54, 64) entre le coulisseau (6) et le levier principal (5) sont débrayables, de sorte que lorsque le coulisseau (6) se déplace vers l'arrière jusqu'à la position de débrayage (6d), le coulisseau (6) entraîne le levier principal (5) en rotation dans le sens anti-horaire (5a) et lorsque le coulisseau (6) poursuit son déplacement vers l'arrière au-delà de la position de débrayage (6d), le coulisseau (6) libère le levier principal (5), permettant la rotation de ce dernier dans le sens horaire (5h).

7. Siège pliant selon l'une quelconque des revendications 2 à 6, **caractérisé en ce que** les seconds moyens d'entraînement (8, 9) comprennent au moins un levier de commande (9) des moyens d'ancrage (4) articulé sur l'assise (2) ou sur un élément adjacent, le levier (9) de commande comportant une extrémité (91) reliée à la seconde extrémité (53) du levier principal (5) par des seconds moyens de traction (8).

8. Siège pliant selon la revendication 7, **caractérisé en ce que** les moyens d'accrochage (54, 64) sont constitués d'un système butée (64)-doigt (54), la butée (64) et le doigt (54) étant formés respectivement sur un flanc (64) du coulisseau (6) et sur la première extrémité (52) du levier principal (5).

9. Siège pliant selon l'une quelconque des revendications 6 à 8, **caractérisé en ce que** le coulisseau (6) comporte un flanc(65) coopérant en contact avec une butée de guidage (23) montée sur l'armature de l'assise (2) lorsque le coulisseau (6) se déplace vers l'arrière jusqu'à la position de débrayage (6d), de façon à provoquer un faible déplacement de ce dernier (6) dans une direction non colinéaire à son axe de coulissement, ledit déplacement étant destiné à libérer le levier principal (5) du coulisseau (6).

10. Siège pliant selon l'une quelconque des revendications 4 à 9, **caractérisé en ce que** des moyens de rappel (10) sont disposés entre le coulisseau (6) et l'armature de l'assise (2), les moyens de rappel (10) étant agencés de façon à s'opposer au déplacement du coulisseau (6) vers l'arrière.

11. Siège pliant selon l'une quelconque des revendications 7 à 10, **caractérisé en ce que** les seconds moyens de traction (8) reliant le levier de commande (9) au levier principal (5) comportent au moins une biellette (8) articulée à ses extrémités au moyen de liaisons pivot et/ou glissière.

12. Siège pliant selon l'une quelconque des revendications 4 à 11, **caractérisé en ce que** les premiers moyens de traction (7) reliant le coulisseau (6) au dossier (1) comportent au moins un moyen souple (7) tel qu'un câble.

13. Siège pliant selon l'une quelconque des revendications 4 à 12, **caractérisé en ce que** le guide (22) est constitué d'un doigt apte à coulisser dans un logement (66) oblong formé dans le corps du coulisseau (6).

## Patentansprüche

1. Klappsitz für ein Kraftfahrzeug mit einer Rückenlehne (1), die an ihrer Basis an einer Sitzfläche (2) angelenkt (12) ist und zwischen einer ersten Benutzungsposition (1u) und einer zweiten, umgeklappten Position (1r) verschwenken kann, während die Sitzfläche in ihrem vorderen Abschnitt an einem Boden (3) angelenkt (21) ist und in ihrem hinteren Abschnitt Mittel zum Verankern (4) am Boden (3) aufweist, die sich in einer passiven Position (4p) befinden können, in der die Sitzfläche (2) freigegeben ist und um ihr Gelenk (21) nach vorne gekippt werden kann, oder in einer aktiven Position (4a), in der die Sitzfläche (2) an ihrem hinteren Abschnitt befestigt ist, wobei Verbindungsmittel (5, 6, 7, 8, 9) mit der Rückenlehne ( 1 ) und den Verankerungsmitteln (4) zusammenwirken, um Letztere (4) automatisch in die passive Position (4p) zu bringen, wenn die Rückenlehne (1) über eine dritte, entriegelte Position (1d) hinaus nach vorne geneigt wird, die sich zwischen der ersten Benutzungsposition (1u) und der zweiten, umgeklappten Position (1r) befindet, **dadurch gekennzeichnet, dass** die Verbindungsmittel (5, 6, 7, 8, 9) so ausgebildet sind, dass sie die Verankerungsmittel (4) wieder in die aktive Position (4a) bringen, wenn die Rückenlehne (1) über eine vierte, verriegelte Position (1v) hinaus nach vorne geneigt wird, die sich zwischen der entriegelten Position (1d) und der umgeklappten Position (1r) befindet.

2. Klappsitz nach Anspruch 1, **dadurch gekennzeichnet, dass** die Verbindungsmittel (5, 6, 7, 8, 9) mindestens einen Haupthebel (5) umfassen, der entlang einer quer zum Fahrzeug verlaufenden Achse (51) an der Sitzfläche (2) angelenkt ist und an einem ersten Ende (52) über erste Mitnahmemittel (6, 7) mit der Rückenlehne (1) und an einem zweiten Ende (53) über zweite Mitnahmemittel (8, 9) mit den Verankerungsmitteln (4) verbunden ist.

3. Klappsitz nach Anspruch 2, **dadurch gekennzeichnet, dass** der Haupthebel (5) und die zweiten Mitnahmemittel (8, 9) so ausgebildet sind, dass sie die Verankerungsmittel (4) in die aktive Position (4a) oder die passive Position (4p) bringen können, wenn der Haupthebel (5) im Uhrzeigersinn (5h) oder entgegen dem Uhrzeigersinn (5a) um sein Gelenk (51) verschwenkt.

4. Klappsitz nach Anspruch 3, **dadurch gekennzeichnet, dass** die ersten Mitnahmemittel (6, 7) mindestens einen Schieber (6) umfassen, der an einer mit dem Beschlag der Sitzfläche (2) fest verbundenen Führung (22) beweglich montiert ist und zum einen durch Haltemittel (54, 64) mit dem ersten Ende (52) des Haupthebels (5) und zum anderen durch erste Zugmittel (7) mit der Rückenlehne (1) derart verbunden ist, dass das Umklappen der Rückenlehne ( 1 ) an der Sitzfläche (2) ausgehend von der Benutzungsposition (1u) bis in die umgeklappte Position (1r) die Bewegung des Schiebers (6) von einer ersten, vorderen Position (6av) in eine zweite, hintere Position (6ar) bewirkt.

5. Klappsitz nach Anspruch 4, **dadurch gekennzeichnet, dass** der Schieber (6) derart mit dem Haupthebel (5) zusammenwirkt, dass die Verankerungsmittel (4) zum einen in ihre passive Position (4p) gebracht werden, wenn sich der Schieber (6) nach hinten bewegt und eine dritte Zwischenposition (6i) zwischen der vorderen Position (6av) und der hinteren Position (6ar) überschreitet, und zum anderen wieder in ihre aktive Position (4a) gebracht werden, wenn sich der Schieber (6) nach hinten bewegt und eine vierte, ausgekoppelte Position (6d) überschreitet, die zwischen der Zwischenposition (6i) und der hinteren Position (6ar) liegt, wobei die Zwischenposition (6i) und die ausgekoppelte Position (6d) der entriegelten Position (1d) beziehungsweise der verriegelten Position (1v) der Rückenlehne (1) entsprechen.

6. Klappsitz nach Anspruch 5, **dadurch gekennzeichnet, dass** die Haltemittel (54, 64) zwischen dem Schieber (6) und dem Haupthebel (5) auskoppelbar sind, sodass der Schieber (6), wenn er sich bis in die ausgekoppelte Position (6d) nach hinten bewegt, den Haupthebel (5) entgegen dem Uhrzeigersinn (5a) dreht, und wenn er seine Bewegung nach hinten über die ausgekoppelte Position (6d) hinaus fortsetzt, den Haupthebel (5) freigibt und dessen Drehung im Uhrzeigersinn (5h) zulässt.

7. Klappsitz nach einem der Ansprüche 2 bis 6, **dadurch gekennzeichnet, dass** die zweiten Mitnahmemittel (8, 9) mindestens einen Hebel (9) zum Steuern der Verankerungsmittel (4) umfassen, der an der Sitzfläche (2) oder einem benachbarten Element angelenkt ist, wobei der Steuerhebel (9) an einem Ende (91) durch zweite Zugmittel (8) mit dem zweiten Ende (53) des Haupthebels (5) verbunden ist.

8. Klappsitz nach Anspruch 7, **dadurch gekennzeichnet, dass** die Haltemittel (54, 64) aus einem System aus Anschlag (64) und Finger (54) bestehen, wobei der Anschlag (64) und der Finger (54) aus einem Abschnitt (64) des Schiebers (6) beziehungsweise am ersten Ende (52) des Haupthebels (5) geformt sind.

9. Klappsitz nach einem der Ansprüche 6 bis 8, **dadurch gekennzeichnet, dass** der Schieber (6) einen Abschnitt (65) umfasst, der in Kontakt mit einem am Beschlag der Sitzfläche (2) montierten Führungsanschlag (23) zusammenwirkt, wenn sich der Schieber (6) bis in die ausgekoppelte Position (6d) nach hinten bewegt, sodass dieser leicht in einer Richtung verschoben wird, die nicht zu seiner Bewegungsachse linear ist, um den Haupthebel (5) vom Schieber (6) freizugeben.

10. Klappsitz nach einem der Ansprüche 4 bis 9, **dadurch gekennzeichnet, dass** zwischen dem Schieber (6) und dem Beschlag der Sitzfläche (2) Rückstellmittel (10) angeordnet sind, die der Bewegung des Schiebers (6) nach hinten entgegenwirken.

11. Klappsitz nach einem der Ansprüche 7 bis 10, **dadurch gekennzeichnet, dass** die zweiten Zugmittel (8), die den Steuerhebel (9) mit dem Haupthebel (5) verbinden, mindestens einen Schwingarm (8) umfassen, der an seinen Enden mittels Dreh- und/oder Schienenverbindungen angelenkt ist.

12. Klappsitz nach einem der Ansprüche 4 bis 11, **dadurch gekennzeichnet, dass** die ersten Zugmittel (7), die den Schieber (6) mit der Rückenlehne (1) verbinden, mindestens ein flexibles Mittel (7) wie beispielsweise ein Kabel umfassen.

13. Klappsitz nach einem der Ansprüche 4 bis 12, **dadurch gekennzeichnet, dass** die Führung (22) aus einem Finger besteht, der in einer länglichen Aufnahme (66) im Körper des Schiebers (6) gleiten kann.

## Claims

1. Folding seat for a motor vehicle comprising a seat back (1) articulated (12) at its base on a seat base (2) and capable of pivotting between a first position of use (1u) and a second folded-back position (1r), while the seat base is articulated (21) in its front part on a floor (3) and comprises in its rear part means for anchoring (4) to the floor (3) capable of being in a passive position (4p), making it possible to release the seat base (2) in order to tilt it forward about its articulation (21), or in an active position (4a), making it possible to fix the rear part of the seat base (2), the connection means (5, 6, 7, 8, 9) co-operating with the seat back (1) and the anchoring means (4) in order to place the latter (4) automatically in a passive position (4p) when the seat back (1) is tilted forward beyond a third unlocking position (1 d), between the first position of use (1 u) and the second folded-back position (1r), **characterised in that** the connection means (5, 6, 7, 8, 9) are shaped so as to return the anchoring means (4) to the active position (4a) when the seat back (1) is tilted forward beyond a fourth locking position (1v) located between the unlocking position (1d) and the folded-back position (1r).

2. Folding seat according to Claim 1, **characterised in that** the connection means (5, 6, 7, 8, 9) comprise at least one main lever (5) articulated on the seat base (2) along an axis (51) transverse to the vehicle, the main lever (5) being provided with a first end (52) connected to the seat back (1) via first drive means (6, 7) and with a second end (53) connected to the anchoring means (4) via second drive means (8, 9).

3. Folding seat according to Claim 2, **characterised in that** the main lever (5) and the second drive means (8, 9) are shaped so as to be able to place the anchoring means (4) in an active (4a) or passive (4p) position when the main lever (5) pivots about its articulation (51), in the clockwise (5h) or anticlockwise (5a) direction respectively.

4. Folding seat according to Claim 3, **characterised in that** the first drive means (6, 7) comprise at least one slider (6) mounted so as to be mobile on a guide (22) integral with the carcase of the seat (2), the slider (6) being connected, on the one hand, to the first end (52) of the main lever (5) by fixing means (54, 64) and, on the other hand, to the seat back (1) by first traction means (7), so that the folding back of the seat back (1) over the seat base (2) from the position of use (1u) to the folded-back position (1r) causes the displacement of the slider (6), from a first front position (6av) to a second rear position (6ar) respectively.

5. Folding seat according to Claim 4, **characterised in that** the slider (6) cooperates with the main lever (5) so as, on the one hand, to place the anchoring means (4) in a passive position (4p) when the slider (6) is displaced backwards and crosses a third intermediate position (6i) between the front position (6av) and the rear position (6ar) and, on the other hand, to return the anchoring means (4) to the active position (4a) when the slider (6) is displaced backwards and crosses a fourth disengaging position (6d) located between the intermediate position (6i) and the rear position (6ar), said intermediate (6i) and disengaging (6d) positions corresponding to the unlocking (1d) and locking (1v) positions respectively of the seat back (1).

6. Folding seat according to Claim 5, **characterised in that** the fixing means (54, 64) between the slider (6) and the main lever (5) are disengagable, so that when the slider (6) is displaced backwards as far as the disengaging position (6d), the slider (6) drives the main lever (5) in rotation in the anticlockwise direction (5a) and when the slider (6) continues its backwards displacement beyond the disengaging position (6d), the slider (6) releases the main lever (5), allowing the rotation of the latter in the clockwise direction (5h).

7. Folding seat according to any one of Claims 2 to 6, **characterised in that** the second drive means (8, 9) comprise at least one control lever (9) for the anchoring means (4) articulated on the seat base (2) or an adjacent element, the control lever (9) comprising one end (91) connected to the second end (53) of the main lever (5) by second traction means (8).

8. Folding seat according to Claim 7, **characterised in that** the fixing means (54, 64) are constituted by a stop (64) / finger (54) system, the stop (64) and the finger (54) being formed respectively on a side (64) of the slider (6) and on the first end (52) of the main lever (5).

9. Folding seat according to any one of Claims 6 to 8, **characterised in that** the slider (6) comprises a side (65) co-operating in contact with a guide stop (23) mounted on the carcase of the seat base (2) when the slider (6) is displaced backwards as far as the disengaging position (6d), so as to cause a slight displacement of the latter (6) in a direction not colinear with its axis of sliding, said displacement being intended to release the main lever (5) of the slider (6).

10. Folding seat according to any one of Claims 4 to 9, **characterised in that** return means (10) are arranged between the slider (6) and the carcase of the seat base (2), the return means (10) being arranged so as to oppose the backwards displacement of the slider (6).

11. Folding seat according to any one of Claims 7 to 10, **characterised in that** the second traction means (8) connecting the control lever (9) to the main lever (5) have at least one rod (8) articulated at its ends by means of pivot and/or slider-type connections.

12. Folding seat according to any one of Claims 4 to 11, **characterised in that** the first traction means (7) connecting the slider (6) to the seat back (1) comprise at least one flexible means (7) such as a cable.

13. Folding seat according to any one of Claims 4 to 12, **characterised in that** the guide (22) is constituted by a finger capable of sliding into an oblong housing (66) formed in the body of the slider (6).
